# EUROPEAN PATENT SPECIFICATION

(11) **EP 4 000 784 B1**
(45) Date of publication and mention of the grant of the patent: **06.03.2024**
(21) Application number: 21209683.8
(22) Date of filing: 22.11.2021
(51) Int. Cl.: B23K 9/02, B23K 9/028, B23K 9/12, B23K 9/173, B23K 9/18, B23K 9/29

(54) **WELDING TORCH, WELDING DEVICE AND METHOD OF MULTI-WIRE NARROW-GAP WELDING**
SCHWEISSBRENNER, SCHWEISSVORRICHTUNG UND VERFAHREN ZUM MEHRDRAHT-ENGSPALTSCHWEISSEN
CHALUMEAU DE SOUDAGE, DISPOSITIF ET PROCÉDÉ DE SOUDAGE MULTIFILAIRE À FENTE ÉTROITE

(30) Priority: 23.11.2020 NL 2026951
(43) Date of publication of application: 25.05.2022
(73) Proprietor: Sif Holding N.V., 6041 TA Roermond (NL)
(72) Inventor: Lafleur, William Wilhelmus Elisabeth, 6041 AN Roermond (NL)
(74) Representative: Nederlandsch Octrooibureau

(56) References cited:
- EP-A1- 3 505 288
- WO-A1-2010/112068
- WO-A1-2013/091729

## Description

### Field of the invention

The present invention relates to a welding torch for welding of metal parts, a welding device comprising the welding torch and a method of narrow-gap welding.

### Background art

Submerged arc welding (SAW) is a known welding method. In order to perform SAW, various welding devices and welding torches have been developed.

For example, EP3505288A1 discloses a welding torch for a welding device, the welding torch comprising a rectangular body provided with two parallel channels in a longitudinal direction of the rectangular body for guiding electrode wires through the body, wherein each channel has a first part at the entry side of the channel and a second part at the outlet side of the channel, the first part has a first diameter, and a second part has a second diameter, smaller than the first diameter, such that the second part tightly fits around the electrode wire for forming an electrical contact for conducting an electric welding current to electrode wire, wherein the body comprises at least two longitudinal parts, each part provided with at least one groove in the longitudinal direction for forming the channels when the parts are assembled to each other, and a spring loaded connector configured to press to the longitudinal parts together.

The welding torch can be used in welding devices for welding large cylindrical, conical or tubular structures, such as shells for assembling piles. The piles can be used in, for example, oil & gas platforms or wind turbine foundations. A shell can be formed by rolling one or more steel plates in a cylindrical / conical shape and welding the connecting sides of the rolled plate(s). Presently and in the near future the dimensions of these shells are becoming larger. Presently, the diameter of a shell is 8 m. The length of the shell is between 2 and 4 m, and the thickness of the steel plates of the shell is typically between 60 and 120 mm.

Before welding of the rolled shells, grooves (weld preparations) are milled in the connecting sides of the rolled plate in a circumferential direction of the shell in order to obtain welds with a good quality. These grooves are required to accommodate the welding torch in order to deposit welding material starting from the inside the groove to the outside. This milling lead to a removal of material and a need for additional filler material to fill the groove and to obtain the weld.

WO 2010/112068 A1, which forms the basis for the preamble of claim 1, relates to an electric arc-welding welding head comprising a contact device and one or more wire feeder units, the contact device encompassing an electrode assembly, the electrode assembly comprising at least two fusible continuously-fed wire electrodes arranged in a contact device. An electrically insulated duct is provided for electric insulation of at least one of the electrodes so that the electrode is electrically insulated from other electrodes in the electrode assembly.

### Technical Problem

Although the welding torch and welding device enable efficient welding of the shells, it is an object of the invention to further reduce the amount of milling and additional filler material needed for welding.

### Summary of the invention

According to an aspect of the invention this object is achieved by a welding torch for a welding device. The welding torch comprises a first elongated part and is provided with a first channel for guiding a first electrode wire through the welding torch, wherein the first elongated part is provided with a second channel parallel with the first channel along the longitudinal direction for guiding a cold wire through the welding torch, and wherein the second channel is provided with insulation means for electrically insulating the second channel from the first channel characterized in that the insulation means comprise a first insulating tube comprising a ceramic material and a second insulating tube comprising a flexible material, wherein the flexible material comprises rubber or a polymer; wherein the first insulating tube is positioned along a first portion of the second channel proximal to an outlet side of the welding torch; and wherein the second insulating tube is positioned along a second portion of the second channel proximal to an inlet side of the welding torch.

A cold wire is well known to the person skilled in the art and is a wire that is melted by the excess heat of the electrode wires, which is not required anymore to melt the other electrode. This may lead to an increase in welding productivity, without substantially increasing the size of the welding torch and without additional power source. Because the size is not substantially increased, the welding torch is particularly suitable for narrow-gap welding. By providing the first elongated part with a second channel parallel with the first channel along the longitudinal direction of the welding torch, the melting of the cold wire occurs at a constant speed and correct and accurate positioning when the welding torch is in operation. This enables a relatively constant deposition rate for the cold wire, thereby ensuring a good weld quality.

Electrically insulating the second channel prevents electrical currents from flowing through the cold wire. Various materials may be used for electrical insulation.

In the vicinity of the outlet side of the second channel, high temperatures may be reached when the welding torch is in operation. Ceramic materials may be both heat resistant and electrically insulating. However, ceramic materials may be fragile and break easily, especially if these materials are used for relatively long and thin tubes. In contrast, flexible materials do not break easily, but may also be less heat resistant. So, if the insulation means comprise a first insulating tube comprising a ceramic material and a second insulating tube comprising a flexible material; wherein the first insulating tube is positioned along a first portion of the second channel proximal to an outlet side of the welding torch and wherein the second insulating tube is positioned along a second portion of the second channel proximal to an inlet side of the welding torch, the portion of the insulation means more likely to be subj ected to high temperatures is heat resistant, while the length of the relatively thin ceramic tube is kept relatively short, thereby reducing a risk of damaging the insulation means.

In further embodiments, the second channel is along a virtual center line through the center of the first elongated part. This is a particularly efficient arrangement of the channels, thereby enabling a narrow welding torch.

In yet further embodiments, the first insulating tube comprises a collar at the end facing the second insulating tube. This simplifies assembly of the welding torch, since when the second insulating tube is inserted, it will bump upon the collar at the end of the first insulating tube.

In yet further embodiments, the flexible material comprises polyethylene.

In yet further embodiments, the ceramic material comprises aluminum oxide.

According to an aspect of the invention this object is achieved by a welding device comprising a first welding torch and a second welding torch. Either or both the first and the second welding torch may be a welding torch according to any of claims 1-7.

The first welding torch and the second welding torch may be of the same or of a different design. The first welding torch is mounted in a first direction and the second welding torch is mounted in a second direction. In some embodiments, the second direction may be at a predetermined angle with the first direction. The predetermined angle depends on the dimensions of the first and second welding torches. For example, the predetermined angle can be approximately 18°. When the welding device is in operation, the first direction may be perpendicular to a welding direction. The second direction may be in an imaginary plane through the first direction and the welding direction and tilted at the predetermined angle. In operation, a melting path may be maintained between the electrode wires of the first and second welding torches. The application of two welding torches reduces the welding time because two adj acent layers of electrode material can be applied almost simultaneously to the groove.

According to an aspect of the invention this object is achieved by a method of multi-wire narrow-gap welding comprising using a welding torch according to any of claims 1-7or a welding device according to claim 8. The welding torch or the welding device is particularly narrow. A narrow welding torch or welding device can be accommodated into a narrow groove. This enables efficient narrow-gap welding, in which, the amount of milling and additional further material needed for welding is further reduced.

### Short description of drawings

The present invention will be discussed in more detail below, with reference to the attached drawings, in which
Fig. 1 schematically shows schematically an embodiment of a welding device;
Fig. 2 schematically shows a cross-section of a partly welded joint;
Fig. 3 schematically shows a side view of a welding torch 30 that can be applied in the welding device;
Fig. 4 schematically shows a detail of Fig. 3; and
Fig. 5 schematically shows a configuration of two welding torches in an embodiment of the welding device according to the invention.

In the figures like reference numbers indicate like parts.

### Description of embodiments

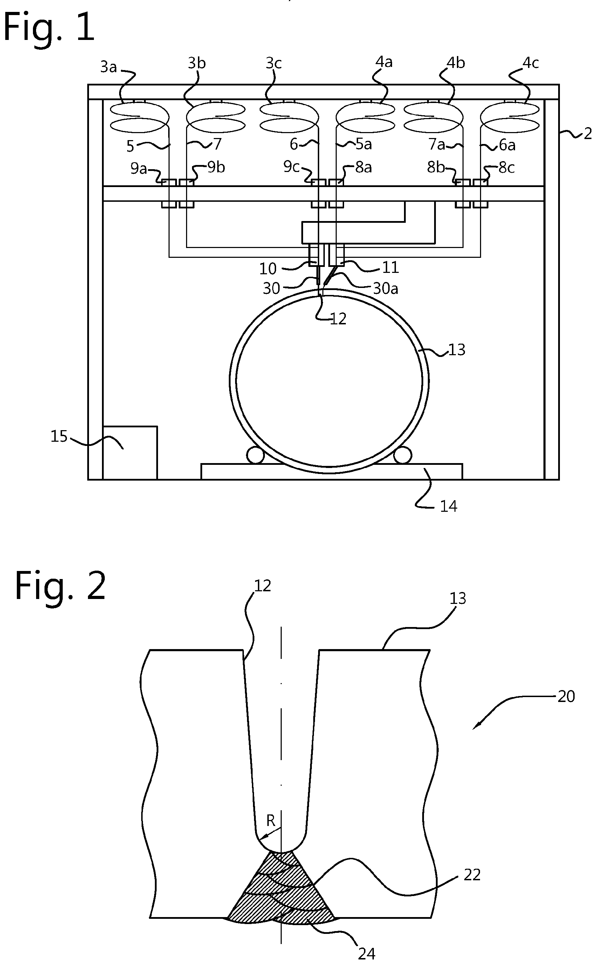

Fig. 1 shows schematically an embodiment of a welding device. The welding device comprises a frame 2 provided with electrode wire turntables 3a, 3c, 4a, 4c for providing electrode wires 5, 6, 5a, 6a and electrode wire feeders 8a, 8c, 9a, 9c. The welding device is further provided with cold wire turntables 3b, 4b for providing cold wires 7, 7a and cold wire feeders 8b, 9b. The welding device further comprises a shell holder and transport device 14 for moving or rotating the cylindrical, tubular or conical structure. In this description this cylindrical, tubular or conical structure is further indicated as shell 13. Furthermore, the welding device comprises welding torch holders 10, 11 and welding torches 30, 30a.

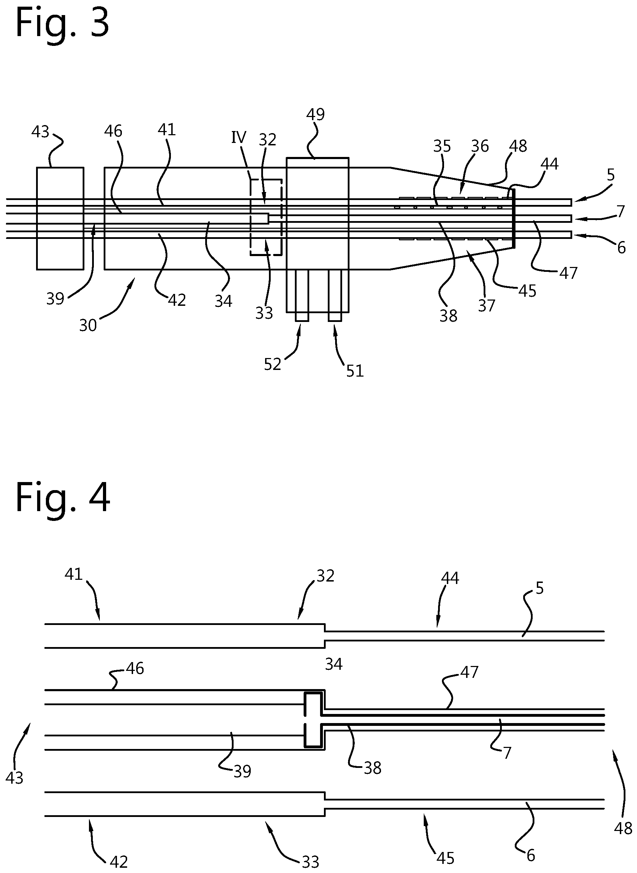

The welding torches 30, 30a are further described below with reference to Figures 3 and 4. Although the description of Figures 3 and 4 refers to a welding torch 30, the description of welding torch 30 is also applicable to welding torch 30a. The welding torches 30, 30a may be similar or dissimilar to each other.

The shell holder and transport device 14 are positioned such that a gap or joint 12 of the shell 13 is under the welding torches 30, 30a.

The electrode and cold wire feeders 8a, 8b, 8c, 9a, 9b, 9c are straightening the electrode and cold wires 5, 6, 7, 5a, 6a, 7a before entering the welding torches 30, 30a, and before transport towards the gap 12. The electrode and cold wires 5, 6, 7, 5a, 6a, 7a can have a diameter of, for example, 2.5 mm. Wires with a diameter of 2.5 mm are relatively narrow, which makes them particularly suitable for use in a welding device for narrow-gap welding.

Furthermore, the welding device comprises a controller 15 arranged to adjust the rotating speed of the shell, the feeding speed of the electrode wire feeders 8a, 8b, 8c, 9a, 9b, 9c and to adjust the mutual distances between the ends of the welding torches 10, 11 and the distance the between the ends of the welding torches 10, 11 and the bottom of the gap 12. Furthermore, the controller 15 is arranged to adjust the position of the welding torches 30, 30a automatically with respect to a symmetry axis of the gap so the consecutive welds can be made at defined positions with respect to the side wall in the gap, as is well known to the skilled person.

This welding device can be used for welding large metal structures, for example piles for structures of wind generators and for off-shore platforms. The piles are assembled from the shells. The separate steel plates for forming the shell can have a thickness in a range between 6 to 120 mm and a length in the range between 2 and 4 m. The shell can be formed by rolling for example one or two plates. The longitudinal sides of the shell are then welded by respectively one or two longitudinal welds. The piles are assembled by stacking consecutive shells and welding the circumferences of adjacent shells.

Before the longitudinal welding of the shell, a first groove and a second groove are milled in the joining sides of the shells. Thereafter, the welding is performed firstly at the first groove at the inner side of the shells. Thereafter, the welding is performed at the outer side using the welding device as described with reference to fig. 1. By applying the two welding torches 30, 30a, with, in total, four, five, six, or more individual electrode wires and/or cold wires, two adjacent layers can be provided nearly simultaneous in a single melting path in the gap. Further subsequent layers can be provided in the gap in a next cycle. During the transport in the cycle welding slag can be released from the weld.

The controller 15 is arranged to automatically adjust the distances between the mutual ends of the welding torches 30, 30a and the bottom of the gap during transport of the shell 13. Furthermore, the controller 15 is arranged to control electrode wire feeders at a transport speed of the electrode wires of about 4 m / min and to control cold wire feed rate as a function or percentage of the transport speed of the electrode wires. For example, the cold wire feed rate may be 50% of the transport speed of the electrode wires, which leads to a cold wire feed rate of about 2 m /min.

Furthermore, the welding device is provided with power sources (not shown) which can be programmed to provide an AC through one of the welding torches 30,30a, the electrode wires and the shell and a DC current through the other one of the welding torches 30,30 a., the electrode wires and the shell. The welding currents can be in the range between 600 to 1000 A for DC welding and in the range between 700 and 1000 A for AC welding.

In general, the welding of the shell 13 is performed such that the grooves are asymmetrically positioned with respect to the center of the steel plate in such a way that the groove at the inner side is less deep than the groove at the outer side of the shell 13.

Fig 2 shows schematically a cross-section of a partly welded joint 20 in the shell 13. Fig. 2 shows a first welded groove 22 and the second non welded groove or gap 12. In this embodiment the thickness of the steel plate of the shell is, for example, 80mm and the first welded groove 22 has for example a depth of 20mm and the second non-welded groove 12 has a depth of 65mm.

The first welded groove 22 is provided with several layers 24 of electrode material. For example in the second non-welded groove 12 the angle between a side wall and the normal on the plate is for example 4° and the radius R of the bottom part of the second non-welded groove or gap 12 is 7 mm. In another example the angle between the side wall and the normal on the plate is 6.5° and the radius R of the bottom part of the second non-welded groove or gap 12 is 8 mm.

In order to weld the gap 12 of the joint, the welding torches 30, 30a should initially be positioned close to the bottom in the gap 12.

For applying the subsequent layers the welding torches 30, 30a are moved upwards. The welding torch 30, 30a according to this description enables tight positioning of the welding torches 30, 30a in the gap 12 such that two consecutive layers can be nearly simultaneous welded in the gap 12 in a single welding cycle. At least four joints can be welded simultaneously with this welding device. The small dimension of the welding torches 30, 30a enables a smaller gap than conventionally is used. So, less metal should be milled away to form the gap 12 in the plate or shell 13. The welding torches 30, 30a according to this description can be advantageously applied in the field of narrow-gap welding whilst applying multi-wire techniques.

A further advantage is that the reduced gap dimension enables forming a smaller joint and provide an improved stiffness of the welded shell so a reduction in design thickness of the wall of the shell is possible.

Fig. 3 shows schematically a side view of a welding torch 30 that can be applied in, for example, the welding device of Fig. 1. Figure 3 shows that the welding torch 30 is provided with three parallel channels 32, 33, 34 in a longitudinal direction of the welding torch 30. The welding torch 30 comprises three elongated parts 35, 36, 37. The elongated parts 35, 36, 37 can be made of, for example, a precipitation hardened CuCrZr alloy (Elmedur X) with excellent thermal conductivity. The first elongated part 35 is provided with a first groove at a first side in the longitudinal direction and a second groove at an opposite side in the longitudinal direction and parallel to the first groove. The second elongated part 35 is provided with a third groove in the longitudinal direction at a first side of the second elongated part such that when the elongated first and second parts are connected the channel 32 is formed. Furthermore, the third elongated part 36 is provided with a fourth groove in the longitudinal direction at a first side of the third elongated part such that when the elongated first and third parts are connected the channel 33 is formed. The channels 32, 33 guide the respective electrode wires 5, 6 through the elongated body 31. Furthermore, the first elongated part 35 is provided with the channel 34 parallel with first and second grooves through the center of the first elongated part. The channel 34 guides the cold wire 7 through the elongated body 31.

Each channel 32, 33 has a first part 41, 42 at the entry side 43 and a second part 44, 45 at the outlet side 48. The second parts 44, 45 of the channels 32, 33 has a slightly smaller diameter than the diameter of the first parts 41, 42 of the channels 32, 33. The diameter of the second part 44, 45 of the channel 32, 33 is such that it tightly fits around the electrode wires 5, 6 for forming an electrical contact for conducting an electric welding current to the electrode wires 5, 6.

The channel 34 for guiding the cold wire 7 is electrically insulated from the channels 32, 33. The channel 34 is insulated by inserting insulating tubes 38, 39 into the channel 34. The insulating tubes 38, 39 may be removable from the welding torch 30, for example when the welding torch 30 is not in operation. The cold wire 7 can be guided through the insulating tubes 38, 39 and is then electrically insulated from the channels 32, 33.

According to the invention, the insulating tubes 38, 39 comprise a first insulating tube 38 and a second insulating tube 39. The first insulating tube 38 is located proximal to the outlet side 48 and the second insulating tube 39 is located proximal to the inlet side 43. A length of the second insulating tube 39 may be greater than a length of the first insulating tube 38.

When a welding device comprising the welding torch 30 is in operation, temperatures close to the outlet side 48 of the welding torch 30 will normally be higher than temperatures close to the inlet side 43. It may therefore be beneficial to provide a heat-resistant first insulating tube 38. The first insulating tube 38 comprises a material that is both electrically insulating and heat resistant. Ceramic materials are both electrically insulating and heat resistant. An example of such a ceramic material that is both electrically insulating and heat resistant is aluminum oxide. Of course, other materials are also possible for the first insulating tube 38.

The first insulating tube 38 may have an inside diameter such that it tightly fits around the cold wire 7. The first insulating tube 38 may be provided with a collar.

The second insulating tube 39 has an inside diameter such that it fits around the cold wire. The second insulating tube may have an outside diameter such that the second insulating tube 39 does not fit inside the first insulating tube 38. This is to prevent the second insulating tube 39 from sliding into the first insulating tube 38. If the first insulating tube 38 is provided with a collar, the width of the collar should be such that the first insulating tube 38 is prevented from sliding into the second insulating tube 39.

During normal operation, the second insulating tube 39 will not be exposed to temperatures that are as high as the temperatures the first insulating tube 38 are exposed to. Therefore, the requirements regarding heat resistivity of the second insulating tube 39 are lower than the heat resistivity requirements of the first insulating tube 38.

Although the second insulating tube 39 can comprise the same materials as the first insulating tube 38, tubes made from ceramic materials such as aluminum oxide may be susceptible to breaking. Especially if the length of the second insulating tube 39 is relatively long, for example if the second insulating tube 39 is longer than the first insulating tube 38, it may be advantageous if the second insulating tube comprises a material different from a material of the first insulating tube 38. It is noted that, in a welding torch 30 suitable for narrow gap welding, it is advantageous if the insulation means around the cold wire 7 are long and thin, because this allows for an arrangement in which a cold wire 7 is provided in the welding torch 30, without a need for the welding torch 30 to become significantly wider. According to the invention, the second insulating tube 39 comprises a flexible material, thereby reducing the risk that the second insulating tube 39 breaks and comprises rubber or a polymer, such as polyethylene.

The channel 34 has a first part 46 at the entry side 43 and a second part 47 at the outlet side 48. The second part 47 of the channel 34 has a slightly smaller diameter than the diameter of the first part 46 of the of the channel 34. The diameter of the second part 47 is such that the first insulating tube 38 tightly fits inside. If the first insulating tube 38 is provided with a collar, the collar does not fit inside the second part 47. If the first insulating tube 38 is provided with a collar, the diameter of the first part 46 is such that the collar of the first insulating tube 38 fits inside. The diameter of the first part 46 is such that the second insulating tube 39 fits inside.

Furthermore, the welding torch 30 is provided with a clamp 49 configured to hold to the first, second and third elongated parts 35, 36, 37 together. The clamp 49 is provided with two spring plungers 51, 52. The spring plungers are adjustably mounted in the holes in the clamp 49, such that in an assembled state, both spring plungers 51, 52 are directed to the center line of the channels 32, 33 of the welding torch for exerting a pressing force on the electrode wires 5, 6. In this arrangement the clamp 49 provides a sufficient and directional constant contact pressure and cross-sectional area for conducting the electrode currents through the electrode wires 5, 6.

The clamp 49 may comprise an electrically insulating material, such as polyether-ether-ketone. This prevents unwanted short circuits.

Furthermore, the side of the welding torch 30 near the outlet 48 can be partially bevelled. This bevelled sides enable close positioning of the welding torches 30, 30a in a welding device. In this embodiment the dimensions of the welding torch 30 can be for example 136 x 30 x 6 mm (1 x w x h). Also, a portion of the elongated parts 35, 36, 37 at the outlet side 43 can be provided with an electrically-isolating layer for example a ceramic layer (such as an aluminum oxide layer) to prevent unwished electrical contacts with the gap 12.

Fig. 4 shows schematically an enlarged part of the side view of the welding torch 30 of Fig. 3. The area shown by Fig. 4 is marked using the dotted line IV in Fig. 3.

Fig. 4 schematically shows part of the channels 32, 33, 34. The channels 32, 33 have a first part 41, 42 at the entry side 43 and a second part 44, 45 at the outlet side 48. The second parts 44, 45 of the channels 32, 33 have a slightly smaller diameter than the diameter of the first parts 41, 42 of the channels 32, 33. The diameter of the second part 44, 45 of the channel 32, 33 is such that it tightly fits around the electrode wires 5, 6 for forming an electrical contact for conducting an electric welding current to the electrode wires 5, 6.

Fig. 4 further shows the insulating tubes 38, 39. The channel 34 has a first part 46 at the entry side 43 and a second part 47 at the outlet side 48. The second part 47 of the channel 34 has a slightly smaller diameter than the diameter of the first part 46 of the of the channel 34. The diameter of the second part 47 is such that the first insulating tube 38 tightly fits inside. The first insulating tube 38 is provided with a collar. The width of the collar is such that the first insulating 38 tube is prevented from sliding into the second insulating tube 39. The collar does not fit inside the second part 47. The diameter of the first part 46 is such that the collar of the first insulating tube 38 fits inside. The diameter of the first part 46 is such that the second insulating tube 39 fits inside.

Although the embodiment described with reference to Figures 3 and 4 is particularly advantageous, because it allows for a narrow and efficient welding torch, different kinds of welding torches are also possible according to various embodiments.

For example, a welding torch comprises a channel for an electrode wire and a channel for a cold wire. The channels are parallel to each other. The welding torch comprises one or more elongated parts and at least some of the one or more elongated parts are provided with one or more channels. These channels may be on the inside of the respective one or more elongated parts, or may be formed by grooves on opposing faces of neighbouring elongated parts. The welding torch comprises two, three, four, or more channels, of which at least one is for guiding an electrode wire and at least one is for guiding a cold wire.

At least one of the channels is for guiding a cold wire through the welding torch. This channel is provided with insulation means, to electrically insulate the cold wire from any electrode wires. In a welding torch for narrow gap welding, these insulation means should be relatively long and thin. The insulation means comprise a first insulating tube and a second insulating tube. The first insulating tube is positioned along a first portion of the channel proximal to an outlet side of the welding torch. Because, during normal operation, temperatures near the outlet side may be high, the first insulating tube comprises a heat-resistant material, namely a ceramic material. Such a ceramic material may, however, be prone to breaking, especially if it is used to form a long and thin tube. So, the second insulating tube, which is positioned along a second portion of the channel proximal to an inlet side of the welding torch, comprises a flexible material, which is less prone to breaking. Because, during normal operation, temperatures near the inlet side may be lower than temperatures near the outlet side, the heat-resistance of the material of the second insulating tube is less important than the heat-resistance of the material of the first insulating tube.

When the welding torch is not in operation, either or both of the first and second insulating tubes may be removable from the welding torch. The first and second insulating tubes may be configured such that they cannot slide into each other, or at least, that they cannot fully slide into each other. For example, an outer diameter of the second insulating tube may be larger than an inner diameter of the first insulating tube. In this way, the second insulating tube cannot slide into the first insulating tube. For example, the first insulating tube may comprise a collar, such that an outer diameter of the collar is larger than an inner diameter of the second insulating tube. In this way, the first insulating tube cannot slide into the second insulating tube.

According to the invention, the first insulating tube comprises a ceramic material.

Examples of suitable ceramic materials are aluminum oxide, Zirconium Oxide, or Silicium Nitride. However, other ceramic materials are also possible. According to the invention, the second insulating tube comprises a flexible material, namely rubber or a polymer, such as polyethylene.

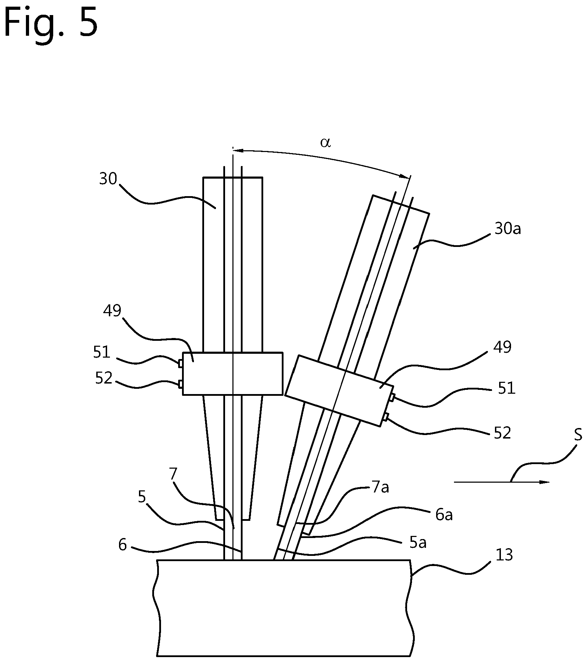

Fig. 5 shows schematically a configuration of two welding torches 30, 30a in a welding device according to an embodiment. In this embodiment the welding torches 30, 30a are arranged such that when the shell holder and transport device 14 is moving or rotating the shell 13 in a welding direction both ends of the welding torches 30, 30a can be positioned further inside the gap for welding and enable narrow-gap welding. In this arrangement the first welding torch 30 is mounted in a first direction perpendicular to surface of the shell or normally to the surface and a second welding torch 30a is mounted in an imaginary plane through the first direction and the moving direction S and tilted at a predetermined angle α with respect to the first direction. Furthermore, the controller 15 is arranged to adjust the first and second welding torch 30, 30a such that, in operation, a melting path is maintained between the electrode wires 5, 6, 5a, 6a of the first and second welding torch 30, 30a. In this configuration the length L between the end of the welding torches 30, 30a and the gap is 25 mm and the angle α is 18°.

The spring plungers 51, 52 in the clamp 49 are rotated about 90 degrees with respect to the center line of the channels and directed along the groove in the direction S. The advantage of the arrangement of the spring plungers 51, 52 in the torches 30, 30a is that the space occupied by the spring plungers 51, 52 in the respective clamps 49 of the torches 30, 30a in the gap can be reduced and hence the gap width of the weld can be further reduced.

In the description of the figures, the invention has been described with reference to specific embodiments thereof. It will, however, be evident that various modifications and changes may be made thereto without departing from the scope of the invention as summarized in the attached claims.

In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

## Claims

1. Welding torch (30) for a welding device, the welding torch (30) comprising a first elongated part (35) and wherein the welding torch (30) is provided with a first channel (32) for guiding a first electrode wire (5) through the welding torch (30), wherein the first elongated part (35) is provided with a second channel (34) parallel with the first channel (32) along the longitudinal direction for guiding a cold wire (7) through the welding torch (30) and wherein the second channel (34) is provided with insulation means for electrically insulating the second channel (34) from the first channel (32), **characterized in that** the insulation means comprise a first insulating tube (38) comprising a ceramic material and a second insulating tube (39) comprising a flexible material, wherein the flexible material comprises rubber or a polymer, wherein the first insulating tube (38) is positioned along a first portion of the second channel (34) proximal to an outlet side of the welding torch (30), and wherein the second insulating tube (39) is positioned along a second portion of the second channel (34) proximal to an inlet side of the welding torch (30).

2. The welding torch (30) according to claim 1, wherein the second channel (34) is along a virtual center line through the center of the first elongated part (35).

3. The welding torch (30) according to any of claims 1-2, wherein the first insulating tube (38) further comprises a collar at the end facing the second insulating tube (39).

4. The welding torch (30) according to any of claims 1-3, wherein the flexible material comprises polyethylene.

5. The welding torch (30) according to any of claims 1-4, wherein the ceramic material comprises aluminum oxide.

6. The welding torch (30) according to any of claims 1-5, wherein the first insulating tube (38) and/or the second insulating tube (39) is removable from the welding torch (30).

7. The welding torch (30) according to any of claims 1-6, wherein the torch comprises a first electrode wire (5) and a cold wire (7), and wherein the first electrode wire (5) and the cold wire (7) have a diameter of 2.5 mm.

8. Welding device comprising a first welding torch (30) according to any of the preceding claims and a second welding torch (30) according to any of the preceding claims, wherein the first welding torch (30) is mounted in a first direction and the second welding torch (30) is mounted in a second direction at a predetermined angle with the first direction.

9. Method of multi-wire narrow-gap welding comprising using a welding torch (30) according to any of claims 1-7 or a welding device according to claim 8.

## Patentansprüche

1. Schweißbrenner (30) für eine Schweißvorrichtung, wobei der Schweißbrenner (30) einen ersten länglichen Teil (35) umfasst und wobei der Schweißbrenner (30) mit einem ersten Kanal (32) versehen ist, um einen ersten Elektrodendraht (5) durch den Schweißbrenner (30) zu führen, wobei der erste längliche Teil (35) mit einem zweiten Kanal (34) parallel zu dem ersten Kanal (32) entlang der Längsrichtung versehen ist, um einen Kaltdraht (7) durch den Schweißbrenner (30) zu führen, und wobei der zweite Kanal (34) mit Isoliermitteln zum elektrischen Isolieren des zweiten Kanals (34) von dem ersten Kanal (32) versehen ist, **gekennzeichnet dadurch, dass** die Isoliermittel ein erstes Isolierrohr (38), das ein keramisches Material umfasst, und ein zweites Isolierrohr (39) umfassen, das ein flexibles Material umfasst, wobei das flexible Material Gummi oder ein Polymer umfasst, wobei das erste Isolierrohr (38) entlang eines ersten Teils des zweiten Kanals (34) proximal zu einer Auslassseite des Schweißbrenners (30) angeordnet ist, und wobei das zweite Isolierrohr (39) entlang eines zweiten Teils des zweiten Kanals (34) proximal zu einer Einlassseite des Schweißbrenners (30) angeordnet ist.

2. Schweißbrenner (30) nach Anspruch 1, wobei der zweite Kanal (34) entlang einer virtuellen Mittellinie durch die Mitte des ersten länglichen Teils (35) verläuft.

3. Schweißbrenner (30) nach einem der Ansprüche 1-2, wobei das erste Isolierrohr (38) ferner einen Kragen an dem Ende umfasst, das dem zweiten Isolierrohr (39) zugewandt ist.

4. Schweißbrenner (30) nach einem der Ansprüche 1-3, wobei das flexible Material Polyethylen umfasst.

5. Schweißbrenner (30) nach einem der Ansprüche 1-4, wobei das keramische Material Aluminiumoxid umfasst.

6. Schweißbrenner (30) nach einem der Ansprüche 1-5, wobei das erste Isolierrohr (38) und/oder das zweite Isolierrohr (39) von dem Schweißbrenner (30) abgenommen werden können.

7. Schweißbrenner (30) nach einem der Ansprüche 1-6, wobei der Brenner einen ersten Elektrodendraht (5) und einen Kaltdraht (7) umfasst, und wobei der erste Elektrodendraht (5) und der Kaltdraht (7) einen Durchmesser von 2,5 mm haben.

8. Schweißvorrichtung, die einen ersten Schweißbrenner (30) nach einem der vorhergehenden Ansprüche und einen zweiten Schweißbrenner (30) nach einem der vorhergehenden Ansprüche umfasst, wobei der erste Schweißbrenner (30) in eine erste Richtung angebracht ist und der zweite Schweißbrenner (30) in eine zweite Richtung in einem vorbestimmten Winkel mit der ersten Richtung angebracht ist.

9. Verfahren zum Mehrdraht-Engspaltschweißen unter Verwenden eines Schweißbrenners (30) nach einem der Ansprüche 1-7 oder einer Schweißvorrichtung nach Anspruch 8.

## Revendications

1. Chalumeau de soudage (30) pour un dispositif de soudage, le chalumeau de soudage (30) comprenant une première pièce allongée (35) et où le chalumeau de soudage (30) est pourvue d'un premier canal (32) pour guider un premier fil d'électrode (5) à travers le chalumeau de soudage (30), où la première pièce allongée (35) est pourvue d'un deuxième canal (34) parallèle au premier canal (32) le long de la direction longitudinale pour guider un fil froid (7) à travers le chalumeau de soudage (30) et où le deuxième canal (34) est pourvu de moyens d'isolation pour isoler électriquement le deuxième canal (34) du premier canal (32), **caractérisé en ce que** les moyens d'isolation comprennent un premier tube isolant (38) comprenant un matériau céramique et un deuxième tube isolant (39) comprenant un matériau flexible, où le matériau flexible comprend du caoutchouc ou un polymère, où le premier tube isolant (38) est positionné le long d'une première partie du deuxième canal (34) à proximité d'un côté de sortie du chalumeau de soudage (30), et où le deuxième tube isolant (39) est positionné le long d'une deuxième partie du deuxième canal (34) à proximité d'un côté d'entrée du chalumeau de soudage (30).

2. Chalumeau de soudage (30) selon la revendication 1, où le deuxième canal (34) est le long d'une ligne centrale virtuelle passant par le centre de la première partie allongée (35).

3. Chalumeau de soudage (30) selon l'une quelconque des revendications 1 à 2, où le premier tube isolant (38) comprend en outre un collier à l'extrémité faisant face au deuxième tube isolant (39).

4. Chalumeau de soudage (30) selon l'une quelconque des revendications 1 à 3, où le matériau flexible comprend du polyéthylène.

5. Chalumeau de soudage (30) selon l'une quelconque des revendications 1 à 4, où le matériau céramique comprend de l'oxyde d'aluminium.

6. Chalumeau de soudage (30) selon l'une quelconque des revendications 1 à 5, où le premier tube isolant (38) et/ou le deuxième tube isolant (39) est amovible du chalumeau de soudage (30).

7. Chalumeau de soudage (30) selon l'une quelconque des revendications 1 à 6, où le chalumeau comprend un premier fil d'électrode (5) et un fil froid (7), et où le premier fil d'électrode (5) et le fil froid (7) ont un diamètre de 2,5 mm.

8. Dispositif de soudage comprenant un premier chalumeau de soudage (30) selon l'une quelconque des revendications précédentes et un deuxième chalumeau de soudage (30) selon l'une quelconque des revendications précédentes, où le premier chalumeau de soudage (30) est monté dans une première direction et le deuxième chalumeau de soudage (30) est monté dans une deuxième direction à un angle prédéterminé avec la première direction.

9. Procédé de soudage multifilaire à fente étroite comprenant l'utilisation d'un chalumeau de soudage (30) selon l'une quelconque des revendications 1 à 7 ou un dispositif de soudage selon la revendication 8.
